# FASCICULE DE BREVET EUROPEEN

(11) **EP 1 945 925 B1**
(45) Date de publication et mention de la délivrance du brevet: **03.11.2010**
(21) Numéro de dépôt: 06831197.6
(22) Date de dépôt: 19.09.2006
(51) Int. Cl.: F01N 11/00, F01N 3/023

(54) **PROCEDES DE CONTROLE ET DE FABRICATION DE DISPOSITIFS DE FILTRATION DE PARTICULES**
VERFAHREN ZUR ÜBERPRÜFUNG UND HERSTELLUNG VON PARTIKELFILTERVORRICHTUNGEN
METHODS FOR CONTROLLING AND MAKING PARTICLE FILTERING DEVICES

(30) Priorité: 23.09.2005 FR 0552840
(43) Date de publication de la demande: 23.07.2008
(73) Titulaire: Saint-Gobain Centre de Recherches et d'Etudes Européen, 92400 Courbevoie (FR)
(72) Inventeur: BARDON, Sébastien, F-75020 Paris (FR); GLEIZE, Vincent, Marc, F-84000 Avignon (FR); GIROT, Patrick, Jacques, Dominique, F-84000 Avignon (FR)
(74) Mandataire: Colombier, Christian
(86) Numéro de dépôt international: PCT/FR2006/050908
(87) Numéro de publication internationale: WO 2007/034111

(56) Documents cités:
- EP-A- 1 369 161
- DE-A1- 10 226 439
- US-A- 6 035 715
- US-B1- 6 298 729

## Description

La présente invention se rapporte au domaine des filtres à particules employés dans une ligne d'échappement d'un moteur Diesel pour l'élimination des suies produites par la combustion du carburant. L'invention porte plus particulièrement sur un procédé de contrôle et de diagnostic des propriétés thermomécaniques d'un tel filtre ainsi que sur un procédé de fabrication de filtres à particules.

Les moteurs Diesel sont connus pour produire une quantité de suies importante. Cela résulte de phénomènes de pyrolyse d'hydrocarbure en l'absence d'oxygène au sein même de la flamme de combustion et à l'insuffisance de la température au sein de la chambre de combustion pour brûler l'intégralité des particules de suies ainsi produites. Ces suies, lorsqu'elles sont émises à l'extérieur du véhicule, servent de germes sur lesquels viennent condenser les hydrocarbures imbrûlés, constituant ainsi des particules solides pouvant être inhalées et dont la petite taille permet une progression jusqu'aux alvéoles pulmonaires.

Pour limiter l'émission des suies à l'extérieur du véhicule et respecter les normes environnementales toujours plus sévères, il est connu de disposer sur la ligne d'échappement des dispositifs de filtration, éventuellement associés à des dispositifs catalytiques, ces derniers ayant pour but la transformation d'émissions gazeuses polluantes en gaz inertes. Parmi les émissions gazeuses polluantes figurent notamment les hydrocarbures imbrûlés ainsi que les oxydes d'azote (NOₓ) ou le monoxyde de carbone (CO).

Les dispositifs de filtration de suies, appelés couramment « filtres à particules » sont en général constitués d'un support filtrant en céramique poreuse. Ce support présente généralement une structure en nid d'abeille, une des faces de ladite structure permettant l'admission des gaz d'échappement à filtrer et l'autre face l'évacuation des gaz d'échappement filtrés. Entre ces faces, la structure filtrante présente un ensemble de canaux longitudinaux et parallèles entre eux séparés par des parois poreuses, lesdits canaux étant obturés à l'une de leurs extrémités afin de forcer les gaz d'échappement à traverser lesdites parois poreuses. Pour une bonne étanchéité de l'ensemble, la partie périphérique de la structure est entourée d'un ciment appelé ciment de revêtement. Le filtre est également entouré d'un gainage, fréquemment appelé « canning » et constitué d'un mat en fibres de verre et d'une enveloppe métallique. Afin de conférer une meilleure résistance aux chocs thermiques, les filtres sont parfois constitués d'un assemblage d'éléments monolithiques et parallélépipédiques présentant une structure en nid d'abeille, lesdits éléments étant assemblés à l'aide d'un ciment.

Les céramiques le plus souvent utilisées sont la cordiérite (Mg₂Al₄Si₂O₁₈) ou le carbure de silicium (SiC), ce dernier étant préféré pour ses propriétés de conductivité thermique et de résistance à la corrosion.

Au cours du fonctionnement du moteur, le filtre à particules se charge en particules de suie, lesquelles se déposent sur les parois poreuses. De la même manière que dans la chambre de combustion se pose le problème de la température minimale nécessaire pour permettre la combustion des suies. Les suies étant retenues dans le filtre, la cinétique de combustion peut être plus lente que dans la chambre de combustion, ce qui permet d'abaisser la température de combustion des suies à environ 600°C. Ce gain est toutefois insuffisant pour assurer une combustion des suies au sein du filtre sur toute la plage de fonctionnement du moteur. Il est donc nécessaire de prévoir, à la suite d'un cycle de filtration, un cycle de régénération, au cours duquel les suies sont brûlées.

Le filtre à particules fonctionne donc selon les modes suivants :
- filtration et combustion quasi-simultanée des suies lorsque la température des gaz d'échappement le permet,
- rétention et accumulation des particules de suies dans le filtre lorsque la température des gaz d'échappement est trop faible,
- régénération du filtre avant que les pertes de charge dues à l'accumulation des suies ne deviennent inacceptables.

Le colmatage progressif du filtre lors de la phase de rétention des suies provoque en effet une augmentation de la perte de charge se traduisant par une augmentation de la consommation du moteur.

L'étape de régénération se fait par élévation de la température des gaz d'échappement à l'aide d'une post injection, qui consiste à injecter tardivement dans le cycle moteur du carburant qui va brûler dans la ligne d'échappement.

Lors de la régénération, et du fait de la combustion exothermique des suies, le filtre subit des températures élevées, et en outre inhomogènes au sein du matériau car les particules de suies se déposent préférentiellement dans la partie centrale du filtre ainsi que dans sa partie aval. Le filtre est donc soumis à un choc thermique important, susceptible de générer au sein du matériau des micro-fissurations entraînant une perte partielle ou totale de sa capacité de filtration.

Il apparaît important de pouvoir prédire et contrôler les performances d'un filtre donné en terme de résistance thermomécanique afin de s'assurer de sa robustesse.

Le document US6298729 montre une méthode d'évaluation de la robustesse d'un support céramique.

On entend par robustesse au sens de la présente invention la capacité d'un filtre à maintenir, sans intervention immédiate, un niveau de fonctionnement acceptable dans des conditions de roulage habituelles, notamment du type comprenant un roulage à 60% du temps sur autoroute, 15% en ville et 25% sur route.

Un paramètre couramment employé et dénommé « masse limite en suie » consiste à déterminer la teneur en suie accumulée dans le filtre à partir de laquelle un cycle de régénération dit sévère génère des fissures. La régénération sévère est caractérisée par un passage du moteur au ralenti (typiquement à un régime de 800 tours/minute) lorsque la régénération est déjà amorcée. Cela a pour effet d'emballer la combustion des suies par un apport massif d'oxygène pour un faible débit de gaz d'échappement. La masse limite en suie étant ainsi déterminée, il s'agit alors pour le constructeur automobile d'adapter la fréquence des régénérations afin que ces dernières ne se produisent que pour des masses de suie accumulées inférieures à cette masse limite. Des systèmes d'estimation en ligne de la masse de suie accumulée dans le filtre ont été développés, et sont généralement basés sur une mesure de la perte de charge, c'est-à-dire de la pression différentielle entre l'amont et l'aval du filtre.

Les inventeurs ont toutefois mis en évidence que ce paramètre était insuffisant en terme de prédiction de la robustesse, et qu'il est notamment impossible d'assurer que lors du fonctionnement ultérieur du filtre, la totalité des régénérations se feront en dessous de la masse limite en suie. Il est apparu aux inventeurs que différents facteurs pouvaient avoir pour conséquence que des régénérations se produisent pour des masses en suie nettement supérieures à la masse limite en suie, en particulier de l'ordre de deux fois cette masse limite. Il peut s'agir notamment d'une mauvaise corrélation entre la perte de charge mesurée et la masse de suie réellement accumulée, ou encore d'une sous-estimation de la quantité de suie émise hors de la chambre de combustion, en particulier lors d'un roulage en milieu urbain ou en cas de problème technique du moteur (lié par exemple à une forte consommation d'huile). Une solution à ce problème serait d'augmenter la fréquence des régénérations, ce qui aurait toutefois comme inconvénient d'augmenter la consommation de carburant.

Il subsiste donc un besoin pour pouvoir contrôler et diagnostiquer la robustesse des filtres à particules et pouvoir sélectionner les matériaux et les structures de filtres permettant de garantir cette robustesse.

A cet effet, l'invention a d'abord pour objet un procédé de contrôle de la robustesse d'un filtre à particules destiné à être employé sur la ligne d'échappement d'un moteur Diesel, comprenant les étapes consistant à :
- ayant au préalable déterminé la masse limite en suie dudit filtre, charger un filtre neuf avec un niveau de suie au moins égal à deux fois et au plus égal à trois fois ladite masse limite en suie, puis faire subir une régénération sévère audit filtre, puis, dans un ordre indifférent :
- déterminer l'efficacité de filtration dudit filtre,
- mesurer sa perte de charge et la comparer à la perte de charge du filtre neuf,
- mesurer son niveau de fissuration,
- et enfin contrôler son intégrité après une sollicitation mécanique.

L'invention a également pour objet une méthode de diagnostic de la robustesse d'un filtre à particules destiné à être employé sur la ligne d'échappement d'un moteur Diesel, comprenant les étapes consistant à mettre en oeuvre le procédé de contrôle selon,l'invention et à diagnostiquer qu'un filtre est robuste en comparant l'efficacité de filtration, la variation de perte de charge, le niveau de fissuration et l'intégrité dudit filtre à une valeur prédéterminée et/ou à un niveau prédéterminé.

Il est apparu aux inventeurs que cette manière de procéder permettait de s'assurer, avec un degré de certitude élevé, de la robustesse ou de l'absence de robustesse d'un filtre à particules, et ce pour un moindre coût, l'ensemble des essais réalisés constituant un ensemble nécessaire et suffisant pour atteindre cet objectif.

La détermination de la masse limite en suie comprend de préférence les étapes consistant à charger une population d'au moins dix filtres à des masses de suie différentes, à faire subir une régénération sévère à chacun desdits filtres, puis à déterminer la masse de suie pour laquelle des fissures visibles à l'oeil nu apparaissent.

La régénération sévère comprend de préférence une initiation de la combustion des suies puis un passage du moteur au ralenti. Les étapes de régénération sévère sont avantageusement réalisées de la même manière lorsqu'il s'agit de déterminer la masse limite en suie d'un type de filtres et lorsqu'il s'agit de régénérer un filtre chargé en suie avant de lui faire subir l'ensemble des tests selon l'invention.

Le filtre neuf est de préférence chargé avec un niveau de suie de l'ordre de deux fois et demi sa masse limite en suie avant de subir la régénération sévère.

L'efficacité de filtration du filtre est avantageusement déterminée par la mesure de la quantité de fumée émise en sortie du filtre rapportée à la quantité en entrée. Pour ce faire, on peut placer un fumimètre en amont et en aval du filtre à particules, ce dernier étant disposé sur une ligne d'échappement d'un moteur Diesel. Le fumimètre permet de déterminer la quantité de particules de suie émises grâce à une mesure du noircissement dû à la fumée. Lors de la mesure, le moteur est de préférence placé à son point de fonctionnement correspondant à sa puissance maximale.

Par « perte de charge », on entend au sens de la présente invention la pression différentielle entre l'amont et l'aval du filtre. La perte de charge doit être mesurée selon le même protocole pour le filtre neuf et le filtre régénéré. Différentes méthodes existent, qui sont bien connues de l'homme du métier.

Le niveau de fissuration du filtre est de préférence mesuré à l'aide d'un procédé du type non destructif, notamment à l'aide du procédé décrit dans la demande de brevet FR-A-2 840 405, et en particulier par mesure de la propagation des ondes ultrasonores au travers du filtre. Parmi les paramètres de la propagation (vitesse de propagation, fréquence et amplitude des ondes), la vitesse s'est révélée être un indicateur fiable de la quantité et de la gravité des fissures. Une diminution de la vitesse de propagation trop importante par rapport à la vitesse de propagation des ondes ultrasonores à travers le matériau neuf peut en effet être parfaitement corrélée avec la présence de fissures. La mesure du niveau de fissuration est donc réalisée préférentiellement par comparaison entre la mesure de la vitesse de propagation des ondes ultrasonores au travers du filtre et la mesure équivalente au travers du filtre neuf.

L'intégrité mécanique du filtre est de préférence contrôlée en vérifiant que les composants du filtre restent solidaires après que le filtre a été soumis à des vibrations, en particulier des vibrations représentatives de celles subies par un filtre dans une ligne d'échappement d'un moteur. Par « composants », on entend ici le mat fibreux entourant le filtre ainsi que les éléments monolithiques et parallélépipédiques assemblés entre eux par un ciment dans le cas d'un filtre assemblé. Une intégrité mécanique insuffisante peut se manifester par une désolidarisation du mat fibreux et du filtre, ou encore par une désolidarisation d'un ou plusieurs éléments monolithiques d'un filtre assemblé.

Pour des raisons de facilité opératoire, l'essai est de préférence réalisé à température ambiante. Il peut toutefois être effectué à température plus élevée. Les vibrations subies sont avantageusement caractérisées par des fréquences comprises entre 50 et 250Hz et une durée d'au moins 15 minutes pour une accélération de 30G.

On définit plus précisément, au sens de la présente invention, les indices suivants :
- l'indice d'efficacité de filtration,
- l'indice de perte de charge,
- l'indice de fissuration,
- l'indice d'intégrité.

Ces indices sont mesurés en ayant préalablement déterminé la masse limite en suie et effectué la régénération sévère sur filtre chargé à deux fois et demi cette masse limite en suies en suivant le protocole ci-après défini.

La détermination de la masse limite en suie et la régénération sévère sont réalisées sur un banc moteur équipé d'un dispositif de mesure de la perte de charge. Le moteur employé est un moteur du type DW10A fabriqué par la société PSA. Il s'agit d'un moteur Diesel à injection directe dont la cylindrée est de 2L. Ce moteur est alimenté par un carburant dont la teneur en soufre est inférieure à 350ppm et contenant une teneur en oxyde de cérium de 25ppm, ce dernier étant un additif couramment employé pour abaisser la température de combustion des suies. Le filtre à particules est monté avec son gainage en aval du moteur et d'un catalyseur d'oxydation.

Un population de filtres neufs d'au moins dix filtres est soumise successivement aux étapes suivantes.

Le moteur est mis en marche à pleine puissance à 4000 tours/minute pendant 30 minutes afin de stabiliser thermiquement les filtres montés comme décrit préalablement, c'est-à-dire avec leur gainage. Les filtres sont ensuite démontés et pesés avec leur gainage pour déterminer une masse initiale. Les filtres sont alors remontés sur la ligne d'échappement puis soumis pendant des durées différentes à un fonctionnement du moteur à 3000 tours/minute pour un couple de 50Nm afin d'être chargés à différentes masses de suie. Les filtres étant ensuite pesés, la masse de suie est déterminée pour chaque filtre par la différence entre la masse obtenue et la masse initiale.

Les filtres ainsi chargés sont remontés sur la ligne pour subir une régénération sévère ainsi définie : après une stabilisation à un régime moteur de 1700 tours/minute pour un couple de 95Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40Nm pendant 5 minutes afin d'accélérer la combustion des suies. Le filtre est ensuite soumis à un régime moteur de 4000 tours/minute pendant 30 minutes afin d'éliminer les suies restantes.

Les filtres ainsi régénérés sont inspectés après découpe pour révéler la présence éventuelle de fissures visibles à l'oeit nu. La masse limite en suie correspond à la masse de suie pour laquelle ces fissures apparaissent.

Le procédé de contrôle est ensuite réalisé sur un filtre neuf identique de même nature que les filtres ainsi testés.

La perte de charge du filtre neuf (sans suies) est mesurée pour un débit d'air supérieur à 100m³/h. On mesure également la vitesse de propagation des ultrasons à une fréquence typiquement de 50KHz. L'équipement utilisé peut être par exemple celui commercialisé par la société CNS Farnell sous le nom de « Pundit plus ».

Le filtre est ensuite chargé en suie comme défini précédemment à une teneur égale à deux fois et demi sa masse limite en suie puis régénéré, également selon le protocole décrit précédemment.

L'indice d'efficacité de filtration est défini comme la différence entre la quantité de particules de suie en amont du filtre et la quantité de particules de suie en aval dudit filtre rapportée à la quantité de particules de suie en amont dudit filtre.

Pour ce faire, un fumimètre est placé en amont et en aval du filtre à particules, ce dernier étant placé sur la ligne d'échappement du moteur mis en marche à pleine puissance à 4000 tours/minute pendant 30 minutes.

Les inventeurs ont mis en évidence qu'un filtre robuste devait présenter dans ces conditions de mesure un indice d'efficacité de filtration supérieur ou égal à 85%.

On mesure ensuite la perte de charge du filtre régénéré en suivant le même protocole opératoire que pour le filtre neuf et l'on définit l'indice de perte de charge comme étant le pourcentage de variation de la perte de charge du filtre régénéré par rapport à la perte de charge du filtre neuf. Cet indice peut être positif ou négatif, ce dernier cas de figure se présentant généralement du fait de l'apparition de fissures.

Un filtre robuste doit présenter un indice de perte de charge inférieur ou égal à 10% en valeur absolue.

L'indice de fissuration correspond au pourcentage de variation entre la vitesse de propagation des ondes ultrasonores au travers du filtre régénéré selon l'invention et la vitesse de propagation des ondes ultrasonores au travers du filtre neuf, les deux mesures étant faites selon le même protocole opératoire. Cet indice est en règle générale négatif.

Un filtre robuste doit présenter un indice de fissuration supérieur ou égal à -30%.

Le filtre est enfin soumis au test d'intégrité.

Le filtre est placé dans son gainage sur un banc électrodynamique équipé d'accéléromètres placés à différents endroits. Un premier accéléromètre est placé au contact du filtre au centre d'une des ses faces planes, un deuxième accéléromètre étant placé sur l'enveloppe métallique du gainage. Ces deux accéléromètres au moins bi-axes permettent de mesurer la vibration dans le sens de l'axe du filtre ainsi que les vibrations radiales et un découplage éventuel entre le filtre et son gainage et de contrôler la stabilité de la fixation du filtre gainé au banc électrodynamique.

Le filtre régénéré est soumis à un cycle de vibration à une fréquence de 185Hz comprenant des paliers successifs de 15 minutes correspondant chacun à une accélération donnée. Le premier palier correspond à une accélération de 5G, le second à une accélération de 10G, l'accélération étant ensuite augmentée par pas de 10G pour chaque palier successif.

Ce test de vibration peut être réalisé sur un banc électrodynamique commercialisé par la société LDS Test and Measurement LLC, de capacité 35kN et équipé d'un vérin hydraulique d'effort maximal 10kN, travaillant dans la gamme de fréquence 0-500Hz et d'une centrale hydraulique de 200 bars et de débit 21L/min.

L'indice d'intégrité est défini par le nombre de composants désolidarisés du filtre à l'issue du test. Un filtre robuste présente nécessairement un indice d'intégrité nul.

L'invention a également pour objet une méthode de diagnostic de la robustesse d'un filtre à particules destiné à être employé sur la ligne d'échappement d'un moteur Diesel, comprenant les étapes consistant à déterminer son indice d'efficacité de filtration, son indice de perte de charge, son indice de fissuration et son indice d'intégrité, au sens où ils ont été définis supra, et à diagnostiquer qu'un filtre est robuste s'il présente un indice d'efficacité de filtration supérieur ou égal à 85%, un indice de perte de charge inférieur ou égal à 10% en valeur absolue, un indice de fissuration supérieur ou égal à -30% et un indice d'intégrité nul.

L'invention a enfin pour objet un procédé de fabrication de filtres à particules destinés à être employé sur la ligne d'échappement d'un moteur Diesel comprenant une étape de mise en forme d'un mélange de matières premières minérales et éventuellement organiques définies par leur nature chimique et/ou leur granulométrie, puis de séchage et de cuisson selon certains paramètres, **caractérisé en ce qu**'il comprend en outre les étapes suivantes :
- pour chaque combinaison de nature chimique et granulométrie de matières premières et/ou de paramètres de mise en forme, de séchage et de cuisson, on met en oeuvre la méthode de diagnostic selon l'invention,
- on choisit une combinaison permettant d'obtenir un filtre à particules robuste, puis
- on utilise la combinaison choisie pour produire les filtres à particules.

Les matières premières minérales utilisées sont définies par leur nature chimique et leur granulométrie ou distribution de tailles de particules. Ces deux paramètres vont jouer un grand rôle sur la robustesse et les propriétés thermomécaniques du filtre, notamment par l'influence primordiale qu'elles auront sur la nature chimique et la structure du matériau obtenu, en particulier sur la porosité du matériau (distribution de tailles des pores, homogénéité de la répartition des pores), la nature chimique des grains et des joints de grains etc....

Des matières organiques sont fréquemment ajoutées, qui permettent d'ajuster la viscosité et la plasticité du mélange avant mise en forme.

Les paramètres de mise en forme et le type de mise en forme vont également influer sur la structure du matériau obtenu. Ainsi, lors d'une mise en forme par extrusion pour obtenir une structure en nid d'abeille, la forme de la filière influera par exemple directement sur l'épaisseur des parois ou la densité de canaux.

Les paramètres de séchage et de cuisson, en particulier les cycles temps/température ont également un impact sur la structure du matériau et sur sa nature, la cuisson pouvant par exemple occasionner une modification chimique ou cristallographique des matières premières minérales employées ou une densification du matériau.

L'invention sera mieux comprise à travers la description détaillée de l'exemple de réalisation suivant.

Un filtre en carbure de silicium recristallisé (R-SiC) constitué d'un assemblage d'éléments monolithiques et parallélépipédiques présentant une structure en nid d'abeille est obtenu selon le procédé suivant : lesdits éléments sont extrudés puis cuits à plus de 2000°C et enfin assemblés à l'aide d'un ciment à base de carbure de silicium. La structure obtenue est ensuite usinée afin de lui conférer une forme cylindrique à base circulaire, puis revêtue d'un ciment. Le filtre ainsi produit présente un diamètre de 14,38 cm et une longueur de 25,4cm. La densité de canaux des éléments monolithiques est de 31 canaux par cm². La fabrication de tels filtres est par exemple décrite dans le document de brevet EP-A-816 065 ou EP-A-1 142 619.

Afin de déterminer ses indices d'efficacité de filtration, de perte de charge, de fissuration et d'intégrité, la masse limite en suie de ce type de filtres est mesurée selon le protocole défini *supra* à l'aide de 12 filtres de même nature. La masse limite en suie obtenue est de 7g/L, c'est-à-dire 7 grammes par litre de filtre.

Un filtre neuf est ensuite caractérisé à l'aide du procédé de contrôle selon l'invention. La perte de charge du filtre neuf est de 16,1 mbars.

Le filtre est ensuite chargé en suie de manière à ce que sa masse de suie soit de 18 grammes, soit environ deux fois et demi sa masse limite en suie. Il subit alors une régénération sévère selon le mode opératoire déjà décrit, puis est soumis aux tests selon l'invention. Son indice d'efficacité de filtration est de 88%, ce qui signifie que 88% des suies sont filtrées. La perte de charge du filtre régénéré est de 16,3 mbars, soit une augmentation de seulement 1,2%, cette valeur correspondant à l'indice de perte de charge. La vitesse de propagation des ondes ultrasonores a diminué de 23% relativement à la vitesse de propagation au travers du filtre neuf, ce qui permet de déterminer un indice de fissuration égal à -23%, donc supérieur à -30%. L'indice d'intégrité est quant à lui nul, aucun élément du filtre ne s'étant désolidarisé après le test de mise en vibration.

Un filtre neuf identique au filtre testé a été soumis à des conditions de roulage comprenant un roulage à 60% du temps sur autoroute, 15% en ville et 25% sur route pendant 120 000km et un fonctionnement acceptable du filtre a pu être maintenu.

Le procédé de contrôle et de diagnostic selon l'invention peut s'appliquer au contrôle de la qualité aussi bien d'un filtre neuf que d'un filtre restauré. On entend par filtre restauré un filtre ayant été nettoyé après fonctionnement sur la ligne d'échappement d'un moteur.

Le procédé selon l'invention est également parfaitement adapté au contrôle statistique d'une production de filtres ou à la sélection de filtres robustes dans le cadre du développement de nouveaux matériaux ou procédés de fabrication.

## Revendications

1. Procédé de contrôle de la robustesse d'un filtre à particules destiné à être employé sur la ligne d'échappement d'un moteur Diesel, comprenant les étapes consistant à :
- ayant au préalable déterminé la masse limite en suie dudit filtre, charger un filtre neuf avec un niveau de suie au moins égal à deux fois et au plus égal à trois fois ladite masse limite en suie, puis faire subir une régénération sévère audit filtre, puis, dans un ordre indifférent,
- déterminer l'efficacité de filtration dudit filtre,
- mesurer sa perte de charge et la comparer à la perte de charge du filtre neuf,
- mesurer son niveau de fissuration,
- et enfin contrôler son intégrité après une sollicitation mécanique.

2. Procédé selon la revendication 1, tel que l'on charge le filtre neuf avec un niveau de suie de l'ordre de deux fois et demi sa masse limite en suie.

3. Procédé selon la revendication 1 ou 2, tel que la détermination de la masse limite en suie comprend les étapes consistant à charger une population d'au moins dix filtres à des masses de suie différentes, à faire subir une régénération sévère à chacun desdits filtres, puis à déterminer la masse de suie pour laquelle des fissures visibles à l'oeil nu apparaissent.

4. Procédé selon l'une des revendications précédentes, tel que la régénération sévère comprend une initiation de la combustion des suies puis un passage du moteur au ralenti.

5. Procédé selon l'une des revendications précédentes, tel que l'efficacité de filtration du filtre est déterminée par la mesure de la quantité de fumée émise en sortie du filtre rapportée à la quantité en entrée, ledit filtre étant placé sur une ligne d'échappement d'un moteur Diesel placé à son point de fonctionnement correspondant à sa puissance maximale.

6. Procédé selon l'une des revendications précédentes, tel que l'étape de mesure du niveau de fissuration est réalisée par comparaison entre la mesure de la propagation des ondes ultrasonores au travers du filtre et la mesure équivalente au travers du filtre neuf.

7. Procédé selon l'une des revendications précédentes, tel que l'intégrité mécanique du filtre est contrôlée en vérifiant que les composants du filtre restent solidaires après que le filtre a été soumis à des vibrations.

8. Méthode de diagnostic de la robustesse d'un filtre à particules destiné à être employé sur la ligne d'échappement d'un moteur Diesel, comprenant les étapes consistant à mettre en oeuvre le procédé de contrôle selon l'une des revendications précédentes et à diagnostiquer qu'un filtre est robuste en comparant l'efficacité de filtration, la variation de perte de charge, le niveau de fissuration et l'intégrité dudit filtre à des valeurs prédéterminées et/ou à un niveau prédéterminé.

9. Méthode de diagnostic selon la revendication précédente, tel que l'on diagnostique qu'un filtre est robuste s'il présente un indice d'efficacité de filtration supérieur ou égal à 85%, un indice de perte de charge inférieur ou égal à 10% en valeur absolue, un indice de fissuration supérieur ou égal à -30% et un indice d'intégrité nul.

10. Procédé de fabrication de filtres à particules destinés à être employé sur la ligne d'échappement d'un moteur Diesel comprenant une étape de mise en forme d'un mélange de matières premières minérales et éventuellement organiques définies par leur nature chimique et/ou leur granulométrie, puis de séchage et de cuisson selon certains paramètres, **caractérisé en ce qu'**il comprend en outre les étapes suivantes :
- pour chaque combinaison de nature chimique et granulométrie de matières premières et/ou de paramètres de mise en forme, de séchage et de cuisson, on met en oeuvre la méthode de diagnostic selon la revendication 8 ou 9,
- on choisit une combinaison permettant d'obtenir un filtre à particules robuste, puis
- on utilise la combinaison choisie pour produire les filtres à particules.

## Claims

1. A process for checking the robustness of a particulate filter intended to be used in the exhaust line of a diesel engine, comprising the steps consisting in:
- having first determined the soot mass limit of said filter, loading a new filter with a level of soot at least equal to two times and at most equal to three times said soot mass limit, then making said filter undergo a severe regeneration then, in any order:
- determining the filtration efficiency of said filter;
- measuring its pressure drop and comparing it to the pressure drop of the new filter;
- measuring its level of cracking; and finally
- checking its integrity after a mechanical stress.

2. The process as claimed in claim 1, **characterized in that** the new filter is loaded with a level of soot of around two and a half times its soot mass limit.

3. The process as claimed in claim 1 or 2, **characterized in that** the determination of the soot mass limit comprises the steps consisting in loading a population of at least ten filters with different soot masses, in making each of said filters undergo a severe regeneration, then in determining the soot mass for which cracks, visible to the naked eye, appear.

4. The process as claimed in one of the preceding claims, **characterized in that** the severe regeneration comprises an initiation of the combustion of the soot then changing of the engine to idling speed.

5. The process as claimed in one of the preceding claims, **characterized in that** the filtration efficiency of the filter is determined by measuring the amount of smoke emitted at the outlet of the filter relative to the amount at the inlet, said filter being placed in an exhaust line of a diesel engine placed at its operating point corresponding to its maximum power.

6. The process as claimed in one of the preceding claims, **characterized in that** the step of measuring the level of cracking is carried out by comparison between the measurement of the propagation of ultrasonic waves through the filter and the equivalent measurement through the new filter.

7. The process as claimed in one of the preceding claims, **characterized in that** the mechanical integrity of the filter is checked by verifying that the components of the filter remain firmly attached after the filter has been subjected to vibrations.

8. A method for diagnosing the robustness of a particulate filter intended to be used in the exhaust line of a diesel engine, comprising the steps consisting in implementing the control process as claimed in one of the preceding claims and in diagnosing that a filter is robust by comparing the filtration efficiency, the variation in pressure drop, the level of cracking and the integrity of said filter to predetermined values and/or to a predetermined level.

9. The diagnostic method as claimed in the preceding claim, **characterized in that** a filter is diagnosed as robust when it has a filtration efficiency index greater than or equal to 85%, a pressure drop index less than or equal to 10% in absolute value, a cracking index greater than or equal to -30% and a zero integrity index.

10. A process for manufacturing particulate filters intended to be used in the exhaust line of a diesel engine comprising a step of shaping a mixture of mineral and optionally organic raw materials defined by their chemical nature and/or their particle size, then drying and firing according to certain parameters, **characterized in that** it moreover comprises the following steps:
- for each combination of raw material chemical nature and particle size and/or shaping, drying and firing parameters, the diagnostic method as claimed in claim 8 or 9 is implemented;
- a combination is chosen that makes it possible to obtain a robust particulate filter; then
- the chosen combination is used to produce the particulate filters.

## Patentansprüche

1. Verfahren zur Prüfung der Robustheit eines Partikelfilters, der dazu bestimmt ist, an der Auspuffanlage eines Dieselmotors verwendet zu werden, umfassend die Schritte, die darin bestehen:
- nach vorheriger Bestimmung der Rußgrenzmasse des Filters einen neuen Filter mit einem Rußpegel zu beladen, der wenigstens gleich dem Zweifachen und höchstens dem Dreifachen der Rußgrenzmasse ist, anschließend den Filter einer strengen Regeneration zu unterziehen, dann, in einer beliebigen Reihenfolge,
- die Filtereffizienz des Filters zu bestimmen,
- dessen Druckverlust zu messen und diesen mit dem Druckverlust des neuen Filters zu vergleichen,
- seinen Rissbildungsgrad zu messen,
- und schließlich seine Unversehrtheit nach einer mechanischen Belastung zu kontrollieren.

2. Verfahren nach Anspruch 1, das derart ist, dass der neue Filter mit einem Rußpegel in der Größenordnung vom Zweieinhalbfachen seiner Rußgrenzmasse beladen wird.

3. Verfahren nach Anspruch 1 oder 2, das derart ist, dass die Bestimmung der Rußgrenzmasse die Schritte umfasst, welche darin bestehen, eine Gesamtheit von wenigstens zehn Filtern mit unterschiedlichen Rußmassen zu beladen, einen jeden der Filter einer strengen Regeneration zu unterziehen, dann die Rußmasse zu bestimmen, bei der mit bloßem Auge erkennbare Risse entstehen.

4. Verfahren nach einem der vorstehenden Ansprüche, das derart ist, dass die strenge Regeneration ein Initiieren der Verbrennung des Rußes, dann ein Schalten des Motors in den Leerlauf umfasst.

5. Verfahren nach einem der vorstehenden Ansprüche, das derart ist, dass die Filtereffizienz des Filters durch die Messung der am Ausgang des Filters ausgestoßenen Rauchmenge bezogen auf die Menge am Eingang bestimmt wird, wobei der Filter an einer Auspuffanlage eines Dieselmotors angeordnet ist, der sich auf seinem seiner Maximalleistung entsprechenden Betriebspunkt befindet.

6. Verfahren nach einem der vorstehenden Ansprüche, das derart ist, dass der Schritt des Messens des Rissbildungsgrades durch einen Vergleich zwischen der Messung der Ausbreitung der Ultraschallwellen durch den Filter und der äquivalenten Messung durch den neuen Filter vollzogen wird.

7. Verfahren nach einem der vorstehenden Ansprüche, das derart ist, dass die mechanische Unversehrtheit des Filters **dadurch** kontrolliert wird, dass überprüft wird, ob die Bestandteile des Filters fest miteinander verbunden bleiben, nachdem der Filter Erschütterungen ausgesetzt worden ist.

8. Verfahren zur Diagnose der Robustheit eines Partikelfilters, der dazu bestimmt ist, an der Auspuffanlage eines Dieselmotors verwendet zu werden, umfassend die Schritte, die darin bestehen, das Prüfverfahren nach einem der vorstehenden Ansprüche durchzuführen und durch Vergleichen der Filtereffizienz, der Druckverluständerung, des Rissbildungsgrades und der Unversehrtheit des Filters mit vorbestimmten Werten und/oder mit einem vorbestimmten Grad zu diagnostizieren, ob ein Filter robust ist.

9. Diagnoseverfahren nach dem vorstehenden Anspruch, das derart ist, dass diagnostiziert wird, dass ein Filter robust ist, wenn er eine Filtereffizienzzahl größer oder gleich 85 %, eine Druckverlustzahl kleiner oder gleich 10 % als Absolutwert, eine Rissbildungszahl größer oder gleich -30 % und eine Unversehrtheitszahl gleich null aufweist.

10. Verfahren zur Herstellung von Partikelfiltern, die dazu bestimmt sind, an der Auspuffanlage eines Dieselmotors verwendet zu werden, umfassend einen Schritt des Formens einer Mischung aus mineralischen und eventuell organischen Rohstoffen, die durch ihre chemische Beschaffenheit und/oder ihre Korngröße definiert sind, dann des Trocknens und des Brennens entsprechend bestimmter Parameter, **dadurch gekennzeichnet, dass** es ferner die folgenden Schritte umfasst:
- für jede Kombination aus chemischer Beschaffenheit und Korngröße der Rohstoffe und/oder Formungs-, Trocknungs- und Brennparametern wird das Diagnoseverfahren nach Anspruch 8 oder 9 durchgeführt,
- es wird eine Kombination gewählt, die ermöglicht, einen robusten Partikelfilter zu erhalten, dann
- wird die gewählte Kombination verwendet, um die Partikelfilter herzustellen.
